(19) Europäisches Patentamt
European Patent Office
Office européen des brevets

(11) EP 0 780 400 B1

(12) # FASCICULE DE BREVET EUROPEEN

(45) Date de publication et mention de la délivrance du brevet:
**24.06.1998 Bulletin 1998/26**

(51) Int. Cl.$^6$: **C08C 19/02**

(21) Numéro de dépôt: **96402811.2**

(22) Date de dépôt: **19.12.1996**

(54) **Oligomères de 1,3 diène partiellement hydrogénés aminotéléchéliques et procédé de préparation de ces composés**

Partiell hydrierte aminotelechele Oligomere von 1,3-Dienen und Methode zur Herstellung derselben

Partially hydrogenated aminotelechelic oligomers of 1,3-dienes and processes for preparing the same

(84) Etats contractants désignés:
**AT CH DE ES FR GB IT LI NL**

(30) Priorité: **22.12.1995 FR 9515353**

(43) Date de publication de la demande:
**25.06.1997 Bulletin 1997/26**

(73) Titulaire: **ELF ATOCHEM S.A.**
**92800 Puteaux, Hauts-de-Seine (FR)**

(72) Inventeurs:
- **Cerf, Martine**
**27300 Bernay (FR)**
- **Fouquay, Stéphane**
**76130 Mont Saint-Aignan (FR)**
- **Perthuis, Joel**
**27300 Bernay (FR)**

(74) Mandataire: **Neel, Henry et al**
**Elf Atochem S.A.,**
**4-8, Cours Michelet,**
**La Défense 10**
**F-92800 Puteaux (FR)**

(56) Documents cités:
**EP-A- 0 272 535**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).



Printed by Xerox (UK) Business Services
2.16.3/3.4

## Description

La présente invention a pour objet des oligomères de 1,3-diène partiellement hydrogénés aminotéléchéliques liquides présentant une faible viscosité à température ambiante ainsi qu'un procédé de préparation de ces oligomères.

Dans le brevet US 2,647,146, on décrit la préparation de diamines α, ω à longue chaîne. Plus précisément, ce document concerne la synthèse d'oligomères du butadiène hydrogéné aminotéléchéliques qui consiste à réaliser dans une première étape un dinitrile de formule :

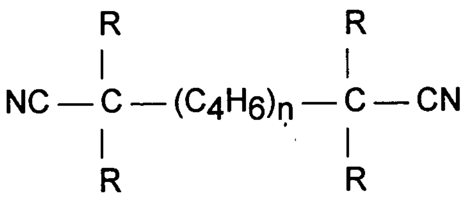

(1)

dans laquelle n est un nombre entier allant de 1 à 25, R représente un radical hydrocarboné généralement saturé ayant un nombre de carbone allant de 1 à 6 et - $C_4H_6$- représente une unité butadiène, puis dans une seconde étape à hydrogéner le dinitrile (1) en une diamine primaire de formule

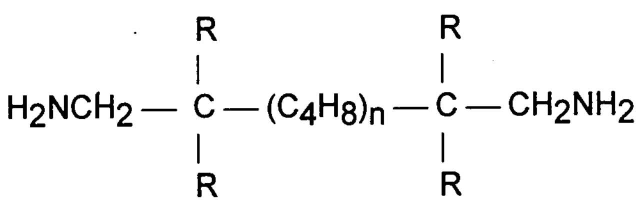

(2)

Le dinitrile (1) est obtenu par oligomérisation du butadiène en présence d'azodinitrile symétrique en milieu solvant.

La diamine (2) est obtenue par hydrogénation catalytique, en présence d'ammoniac, à des températures comprises entre 180° C et 300° C et sous des pressions allant de 197 bars à 4 934 bars. Le catalyseur utilisé est un mélange de palladium sur charbon et de nickel sur kieselguhr. Dans ces conditions d'hydrogénation, les unités butadiène -$C_4H_6$- sont totalement hydrogénées en unités dihydrobutadiène -$C_4H_8$- de la formule (2), consistant en chaînes saturées ayant les structures :

$-CH_2-CH_2-CH_2-CH_2-$ et 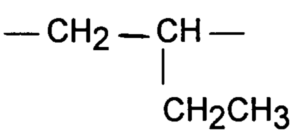

Les produits obtenus se présentent, à température ambiante, sous forme de cires difficiles à mettre en oeuvre.

Le brevet US 4,920,181 concerne également la préparation d' α, ω-diamines à longue chaîne de formule générale :

$$[X](NH_2)_n \qquad (3)$$

dans laquelle n est un nombre allant de 1,4 à 3 et X représente le résidu d'un oligomère vinylique hydrophobe ayant des masses moléculaires moyennes en nombre $\overline{Mn}$ allant de 200 à 5000. A titre d'illustration de tels oligomères, il est mentionné les oligobutadiènes, les oligoisoprènes ainsi que les produits correspondant ayant leurs doubles liaisons partiellement ou complètement hydrogénées. Comme dans le brevet US 2,647,146, les diamines de formule (3) sont obtenues en 2 étapes.

Dans une première étape, on prépare un oligobutadiène cyanotéléchélique en mettant en contact du butadiène et un azodinitrile symétrique en milieu solvant (toluène) à des températures comprises entre 90° C et 130° C sous une

pression d'environ 16 à 18 bars.

L'hydrogénation des fonctions nitrile de l'oligobutadiène cyanotéléchélique ainsi obtenu s'effectue en milieu solvant, en présence d'ammoniac et avec une quantité de cobalt de Raney égale à 10 % en poids par rapport au dinitrile à hydrogéner. Cette hydrogénation se déroule à une température comprise entre 100° C et 200° C sous des pressions allant de 100 bars à 200 bars. Ces conditions permettent de transformer sélectivement les fonctions nitrile en fonctions amine primaire. En outre, il est mentionné que si la durée d'hydrogénation est très longue ou si on ajoute du nickel de Raney au cobalt de Raney, les doubles liaisons de l'oligobutadiène peuvent être plus ou moins hydrogénées. Les conditions d'hydrogénation mentionnées dans ce document (exemples 5 à 8) sont de nature à conduire à des oligobutadiène aminotéléchéliques possédant un taux élevé de double liaisons hydrogénées qui se présentent à température ambiante sous forme de produits cireux difficiles à mettre en oeuvre.

Bien que dans ce document, on indique que les doubles liaisons peuvent être partiellement hydrogénées aucune indication n'est donnée sur la nature des doubles liaisons atteintes. Or, il est connu que les 1,3-diènes, notamment le butadiène, peuvent se polymériser en 1,4 et en 1,2. Ainsi, la polymérisation en 1,4 du butadiène conduit à deux configurations différentes :

- configuration trans :

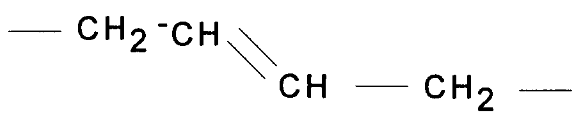

- configuration cis :

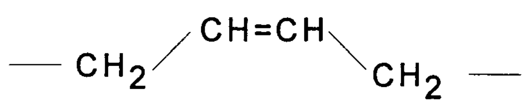

tandis que la polymérisation 1,2 conduit à la formation de doubles liaisons vinylique pendantes :

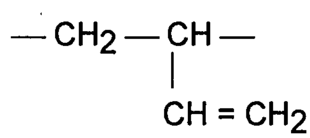

On a une distribution statistique des 3 structures avec un pourcentage molaire de doubles liaisons vinyliques pendantes voisin de 20 %.

Or, la demanderesse a découvert qu'elle pouvait selon certaines conditions d'hydrogénation, hydrogéner au moins 20 % des doubles liaisons provenant de la polymérisation 1,2 des 1,3-diènes, ci-après désignées par doubles liaisons de type 1,2, tout en conservant pratiquement intacte les doubles liaisons provenant de la polymérisation 1,4, ci-après désignées par doubles liaisons de type 1,4 (cis et trans).

La présente invention propose un procédé de préparation d'oligomères de 1,3-diène partiellement hydrogénés aminotéléchéliques comprenant au moins 20 % molaire de doubles liaisons de type 1,2 hydrogénées et, de préférence un pourcentage allant de 25 % à 30 %, et un pourcentage au plus égal à 10 % molaire de doubles liaisons de type 1,4 (cis et trans) hydrogénées et, de préférence un pourcentage molaire inférieur à 1 %.

La présente invention concerne aussi à titre de produits des oligomères de 1,3-diène partiellement hydrogénés aminotéléchéliques de formule :

$$[P](ACH_2NH_2)_x \qquad (4)$$

dans laquelle x est un nombre allant de 1,8 à 2 et, de préférence pratiquement égal à 2, P représente un reste d'oligomère de 1,3-diène comprenant au moins 20 % molaire des doubles liaisons de type 1,2 de structure (a) :

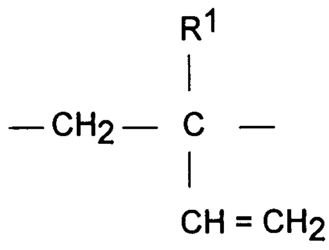

hydrogénées et, au plus 10 % molaire des doubles liaisons de type 1,4 (cis et trans) de structure (b) :

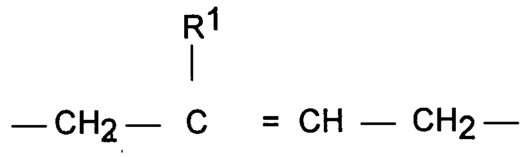

hydrogénées, $R^1$ des structures (a) et (b) représente un atome d'hydrogène, un radical hydrocarboné aliphatique ayant de 1 à 6 atomes de carbone, A représente un reste divalent choisi parmi les restes :

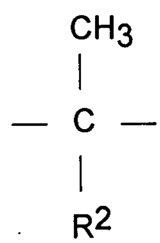 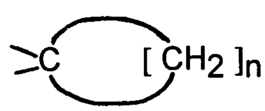

dans lesquels $R^2$ représente un radical hydrocarboné aliphatique, linéaire ou ramifié, ayant un nombre de carbone allant de 1 à 6, un radical cycloaliphatique ayant un nombre de carbone allant de 3 à 7, n est un nombre entier allant de 3 à 9, ledit oligomère de 1,3-diène partiellement hydrogéné amino téléchélique ayant une masse moléculaire moyenne en nombre $\overline{Mn}$ allant de 500 à 5000 et, de préférence, une masse $\overline{Mn}$ comprise entre 1000 et 3000.

A titre d'illustration de 1,3-diène entrant dans la constitution de l'oligomère de 1,3-diène P partiellement hydrogéné, on citera le butadiène ($R^1$=H), l'isoprène ($R^1$=$CH_3$-). L'invention concerne tout particulièrement l'utilisation du butadiène.

Selon la présente invention, le pourcentage molaire des doubles liaisons de type 1,2 hydrogénées est de préférence compris entre 25 % et 30 % et le pourcentage des doubles liaisons de type 1,4 (cis et trans) hydrogénées est, de préférence, inférieur à 1 %.

Parmi les restes divalent de structure :

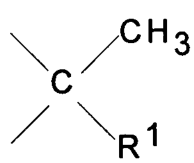 ,

on préfère ceux dans lesquels $R^2$ représente un isobutyle, un cyclohexyle et tout particulièrement un méthyle.

Parmi les restes divalent de structure ,

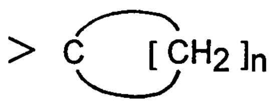

on préfère ceux dans lesquels n est égal à 4, 5 et 6.

Le procédé conforme à l'invention pour la préparation des oligomères de 1,3-diène partiellement hydrogénés aminotéléchéliques de formule (4) consiste à oligomériser un 1,3-diène de formule :

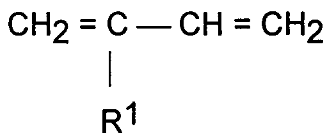

dans laquelle $R^1$ a la signification mentionnée précédemment, en présence d'un azodinitrile symétrique de formule

$$NC—A—N = N—A—CN \qquad (5)$$

A ayant la même signification que dans la formule (4), en un oligomère de 1,3-diène cyanotéléchélique de formule :

$$[ P_1 ] (ACN)_x \qquad (6)$$

dans laquelle $P_1$ représente un reste d'oligomère de 1,3-diène, A et x ayant les mêmes significations que dans la formule (4), puis à l'hydrogéner en présence de cobalt de Raney, ledit procédé étant caractérisé en ce que l'on effectue l'hydrogénation de l'oligomère 1,3-diène cyanotéléchélique (6) à des temprératures allant de 100° C à 200° C, et, de préférence comprise entre 140° C et 180° C, sous une pression d'hydrogène allant de $5 \times 10^5$ Pa à $30 \times 10^5$ Pa et, de préférence comprise entre $10 \times 10^5$ Pa et $15 \times 10^5$ Pa, en présence d'une quantité de cobalt de Raney au plus égale à 5 % en poids par rapport à l'oligomére de 1,3-diène cyanotéléchélique mis en oeuvre et en absence d'ammoniac.

Selon la présente invention, la durée de l'hydrogénation peut varier dans une large mesure et n'est pas critique. Cependant, on préfère ne pas dépasser une durée d'hydrogénation de 30 heures et, de préférence, cette durée est comprise entre 2 et 25 heures. La réaction d'hydrogénation peut être réalisée en masse ou dans un solvant. On préfère utiliser un solvant inerte de type aliphatique tel que les paraffines ayant un nombre de carbone allant de 6 à 12 et, de préférence allant de 8 à 12. A titre d'illustration de tels composés, on citera l'octane, le nonane, le décane ou bien un mélange d'au moins deux des composés précités. On peut également utiliser des coupes pétrolières constituées par des paraffines ou bien par des naphteniques. On évitera l'utilisation de solvants contenant des composés insaturés non aromatiques.

La quantité de cobalt de Raney utilisable est au plus égal à 5 % en poids par rapport à l'oligomère de 1,3-diène cyanotéléchélique mis en oeuvre. De préférence, on utilisera une quantité pondérale comprise entre 0,1 % et 2,5 %. On utilisera de préférence un cobalt de Raney ayant une teneur pondérale en cobalt au moins égale à 80 % et, de préférence comprise entre 85 % et 95 %.

Selon la présente invention, la réaction d'hydrogénation des oligomères de 1,3-diène cyanotéléchélique de formule (6) s'effectue en absence d'ammoniac et on a constaté avec surprise l'absence d'amines secondaires et/ou tertiaires. De plus, la transformation des fonctions nitrile en fonctions amine primaire est supérieure à 95 %. Les oligomères de 1,3-diène cyanotéléchéliques de formule (6) sont connus et décrits dans la littérature et leur préparation ne constitue pas l'objet de l'invention. Ces composés peuvent être notamment obtenus en polymérisant un 1,3-diène en présence d'un amorceur du type azodinitrile symétrique de formule (5), éventuellement en milieu solvant (acetone), à une température comprise entre 60° C et 140° C et sous des pressions allant de 5 bars à 35 bars.

La masse moléculaire moyenne en nombre $\overline{Mn}$ de l'oligomére de 1,3-diène cyanotéléchélique est réglée en faisant varier le rapport molaire azodinitrile/1,3-diène.

De préférence, on opérera de façon à avoir des masses moléculaires moyennes en nombre $\overline{Mn}$ , allant de 500 à 5000 et de préférence comprises entre 1000 et 3000.

A titre d'illustration d'azodinitriles symétriques de formule (5) utilisable selon la présente invention on citera :

le 2,2'-azo-bis-isobutyronitrile (AIBN),
le 2,2'-azo-bis-2-méthylbutyronitrile,
le 2,2'-azo-bis-2,4-diméthylvaleronitrile,
le 1,1'-azo-bis-1-cyclohexanecarbonitrile,
le 2,2'-azo-bis-cyclohexylpropionitrile. On préfère utiliser le 2,2'-azo-bis-isobutylronitrile.

Selon une façon préférée d'opérer, on introduit dans un autoclave muni d'un moyen d'agitation l'oligomère de 1,3 diène cyanotéléchélique, le solvant et le cobalt de Raney fraîchement préparé.

On chauffe à une température de 100° C/120° C sous balayage de gaz inerte tel que l'azote puis après avoir arrêté le balayage d'azote on chauffe le milieu réactionnel à une température au plus égale à 200° C et, de préférence à une température comprise entre 140° C et 180° C. L'hydrogène est alors introduit et la pression d'hydrogène est amenée à au plus 30 bars, et, de préférence entre 10 bars et 15 bars.

La température et la pression sont maintenues jusqu'à ce que l'on observe une transformation quasi totale (> 95 %) des fonctions nitrile en fonction CH2 NH2. Ceci peut être mesuré notamment par l'alcalinité.

Après refroidissement, on élimine le cobalt de Raney par filtration puis ensuite on élimine le solvant par évaporation sous pression réduite. On obtient un produit liquide qui est limpide et quasiment incolore.

Dans ces conditions, on obtient un taux d'hydrogénation de l'ensemble des doubles liaisons de l'oligomère de 1,3-diène cyanotéléchélique au plus égale à 25 %.

Ce taux d'hydrogénation peut être notamment déterminé par l'indice d'iode des produits obtenus qui est compris entre 250 et 400.

Par analyse en résonance magnétique nucléaire (RMN) du carbone 13 ($^{13}C$), on constate que le taux d'hydrogénation des doubles liaisons de type 1,4 (cis et trans) est au plus égal à 10 % et se situe généralement en dessous de 1 % et que le taux d'hydrogénation des doubles liaisons de type 1,2 est au moins égal à 20 % et se situe de préférence entre 25 % et 30 %.

Le taux d'hydrogénation total des doubles liaisons est avantageusement compris entre 5 % et 15 %.

La masse moléculaire moyenne en nombre $\overline{Mn}$ de l'oligomére de 1,3-diène partiellement hydrogéné aminotéléchélique obtenu est fonction de la masse moléculaire en nombre $\overline{Mn}$ de l'oligomére de 1,3-diène cyanotéléchélique mis en oeuvre.

Cette masse molaire $\overline{Mn}$ est comprise entre 500 et 5000 et, de préférence, comprise entre 1000 et 3000.

Les oligomères de 1,3-diène partiellement hydrogéné aminotéléchéliques de la presente invention présentent l'avantage d'être des liquides de faible viscosité et de faible couleur (indice de coloration sur l'échelle de GARDNER inférieur à 4). Ils présentent d'une façon générale des viscosités inférieures à 2000 mPa.s à 30° C.

Leur transition vitreuse (Tg) mesurée par DSC se situe entre -85° C et - 75° C.

De tels oligomères peuvent être utilisés, notamment dans la synthèse de copolymères blocs, dans la synthèse de polyurés, dans les formulations polyuréthanes en tant que "activateur" de réactivité de polybutadiènes hydroxylés.

Les exemples qui suivent illustrent l'invention.

EXEMPLE 1

Préparation d'un oligomère de 1,3-butadiène cyanotéléchélique :

Dans un autoclave de 5 litres, on introduit 91,08 g de 2,2'-azo-bis-isobutyronitrile (AIBN) soit 0,555 mole puis, après fermeture hermétique et désoxygénation de l'autoclave,on introduit 2000 g de butadiène (36,975 moles). On agite et on porte le milieu réactionnel à 92° C, température que l'on maintient pendant 3 heures. La pression varie entre 14 x $10^5$ Pa et 18 x $10^5$Pa pendant la durée de la réaction.

Après refroidissement du milieu réactionnel jusqu'à environ 20°C, on élimine l'excès de butadiène par dégazage. On introduit ensuite le liquide résiduel incolore et limpide obtenu (722 g) dans un évaporateur rotatif puis on élimine sous pression réduite le butadiène susceptible d'être dissous, et éventuellement les quelques impuretés volatiles.

Après filtration du produit ainsi traité on obtient 595 g d'un oligomère de 1,3-butadiène cyanotéléchélique qui présente les caractéristiques physico-chimiques suivantes :

- rendement : 28 % par rapport au butadiène engagé,
- viscosité Brookfield à 30° C : 980 mPa.s
- masse moléculaire moyenne en nombre $\overline{Mn}$ , déterminée par chromatographie par perméation de gel (étalon : polystyrène ramené en èquivalent polybutadiène) : 1380
- indice d'iode = 406

L'oligomère de 1,3-butadiène cyanotéléchélique a été identifié par RMN du $^{13}C$ sur un appareil BRUCKER® (fréquence pour le $^{13}C$ = 75,47 MHz) avec $CDCl_3$ comme solvant.

Le pourcentage molaire des doubles liaisons de type 1,4 (cis et trans) est égal à 79 % et celui des doubles liaisons de type 1,2 est égal à 21 %.

EXEMPLE 2 (conforme à l'invention)

Hydrogénation de l'oligomére de 1,3-butadiène cyanotéléchélique obtenu dans l'exemple 1.

Le cobalt de Raney utilisé est un cobalt de Raney type A-8000® commercialisé par la Société Activated Metal and Chemicals Inc. Il est composé de 86 % à 95 % de cobalt et de 5 à 14 % d'aluminium.

Dans un autoclave de 1 litre, muni d'une agitation, de moyens de chauffage, de prises de température et de pression, on introduit 300 g de l'oligomére de 1,3-butadiène cyanotéléchélique de l'exemple 1, 45 g d'octane et 6 g de cobalt de Raney, soit 2 % en poids par rapport au dinitrile mis en oeuvre. Le cobalt de Raney a été préalablement lavé au méthanol pour éliminer la majorité de l'eau qu'il contenait. Ensuite, on chauffe à 120° C sous balayage d'azote et on maintient cette température le temps nécessaire pour obtenir une teneur en eau inférieure à 250 ppm.

Le balayage d'azote est coupé et la température est amené à 140° C. L'hydrogène est introduit et la pression totale d'hydrogène est amenée à 12 x $10^5$Pa. La température et la pression sont maintenues 12 heures, temps au bout duquel le taux de conversion des fonctions -CN en $-CH_2NH_2$ est supérieure à 95 %. Pour ce faire, nous avons mesuré l'alcalinité qui dans ce cas est égale à 1,33 méq HCl/g. Ensuite, on élimine le cobalt de Raney par filtration et l'octane est évaporé sous pression réduite.

On obtient un produit limpide faiblement coloré ayant un indice de coloration sur l'échelle de GARDNER égal à 3 qui présente les caractéristiques physico-chimiques suivantes :

- viscosité Brookfield à 30° C : 1300 mPa.s
- masse moléculaire moyenne en nombre $\overline{Mn}$ : 1400
- fonctionnalité : 1,86
- température de transition vitreuse mesurée par analyse thermique différentielle (ATD) : -80°C.
- indice d'iode : 387

Le pourcentage des doubles liaisons de type 1,2 et 1,4 (cis et trans) ainsi que le taux de transformation des fonctions -CN en $-CH_2NH_2$ ont été déterminés par RMN sur un appareil Brucker et dans les mêmes conditions que mentionnées dans l'exemple 1.

Sur le spectre de RMN du $^{13}C$ de l'oligomére du 1,3 butadiène partiellement hydrogéné aminotéléchélique obtenu, on détecte entre 50 ppm et 56 ppm les raies caractéristiques des carbones des groupes CH2NH2, correspondant aux fins de chaînes CN hydrogénées. Les raies caractéristiques des fins de chaînes - CN se situent à environ 125 ppm.

Les intégrations de ces raies permettent de déterminer le taux de conversion des fonctions -CN en -CH2NH2 qui, dans le cas présent, est voisin de 95 %.

La raie entre 10 ppm et 12 ppm correspond aux groupes -CH3 des doubles liaisons de type 1,2 hydrogénées. Son intégration, combinée à celle des raies situées à environ 143 ppm et entre 126 et 136 ppm qui correspondent respectivement aux doubles liaisons de type 1,2 et aux doubles liaisons de type 1,4 (cis et trans), permet de calculer le pourcentage de doubles liaisons de type 1,2 hydrogénées. Le taux de-$CH_2$-dû à l'hydrogénation des doubles liaisons de type 1,4 (cis et trans) est déterminé par le calcul en considérant un rapport 21 %-79 % de doubles liaisons de type 1,2 et de type 1,4 (cis et trans).

Ainsi, pour l'oligomère de 1,3-butadiène partiellement hydrogène aminotéléchélique obtenu selon les conditions d'hydrogénations mentionnées précédemment, le pourcentage de doubles liaisons hydrogénées est égal à 2 % et le pourcentage de doubles liaisons de type 1,2 hydrogénées est égal à 25,5 %.

EXEMPLES 3, 4, 5 et 6 (conformes à l'invention)

Dans les exemples 3, 4, 5 et 6 qui suivent on effectue l'hydrogénation de l'oligomére de 1,3-butadiène cyanotéléchelique obtenu dans l'exemple 1.

On procède comme dans l'exemple 2, excepté que l'on fait varier certains paramètres réactionnels (pression, température, pourcentage de cobalt Raney).

Les variations de ces paramètres réactionnels ainsi que les caractéristiques physico-chimiques des oligoméres de 1,3-butadiène partiellement hydrogéné aminotelecheliques sont rassemblées dans le tableau 1.

Dans ce tableau, les pourcentages d'hydrogénation des doubles liaisons ainsi que des fonctions nitrile ont été déterminées par RMN du $^{13}C$ selon le mode de calcul indiqué dans l'exemple 2.

| EXEMPLE | PARAMETRES REACTIONNELS | | | | POURCENTAGE D'HYDROGENATION | | | INDICE D'IODE |
|---|---|---|---|---|---|---|---|---|
| | T (° C) | Pression totale d'hydrogène x $10^5$ Pa | Cobalt de Raney (%) | Durée (h) | Type 1,4 (cis et trans) (%) | Type 1,2 (%) | des -CN ou- $CH_2NH_2$ | |
| 3 | 160 | 12 | 1 | 13 | 0,5 | 28 | 99,1 | 384 |
| 4 | 160 | 12 | 0,5 | 25 | 0 | 26 | 97 | 401 |
| 5 | 120 | 18 | 2 | 25 | 7,75 | 28,5 | 98 | 387 |
| 6 | 140 | 12 | 1 | 20 | 3,4 | 23,5 | 96 | 400 |

TABLEAU 1

EXEMPLE 7 (non conforme à l'invention)

Nous avons hydrogéné l'oligomére de 1,3-butadiène cyanotéléchélique obtenu dans l'exemple 1 selon les conditions d'hydrogénation mentionnées dans le brevet US 4,920,181 (exemples 5 à 8).

Ces conditions sont :

- température T : 200° C
- catalyseur : cobalt de Raney, 10 % en poids par rapport au dinitrile mis en oeuvre
- solvant : toluène
- présence d'ammoniac
- pression totale : $100 \times 10^5$ Pa avec une pression partielle d'hydrogène égale à $70 \times 10^5$ Pa et une pression partielle d'ammoniac égale à $30 \times 10^5$ Pa
- durée d'hydrogénation : 10 heures.

Dans ces conditions d'hydrogénation :

- 95 % des doubles liaisons de type 1,2- sont hydrogénées, et,
- 31,9 % des doubles liaisons de type 1,4 (cis et trans) sont hydrogénées : La transformation des fonctions -CN en -CH2NH2 est quasiment quantitative. Le produit obtenu est cireux.

EXEMPLE 8

L'oligomère de 1,3-butadiène partiellement hydrogéné aminotéléchélique de l'exemple 2 (ci-après désigné par oligomère diaminé) a été testé en tant qu'activateur de réactivité dans une formulation polyuréthane.

Un polybutadiène hydroxylé ayant une fonctionnalité égale à 2,3 a été formulé avec 10 % en poids de l'oligomère diaminé ayant une fonctionnalité égale à 1,85. Une quantité équimoléculaire de diisocyanate par rapport aux fonctions -OH et - NH2 a été introduite et la cinétique de gélification ou cinétique de réaction a été mesurée par détermination de la viscosité. La gélification démarre au bout de 40 minutes lorsque 10 % en poids d'oligomère diaminé ont été ajoutés, alors qu'elle ne démarre qu'au bout de 80 minutes en l'absence dudit oligomère diaminé.

L'oligomére diaminé a permis dans ces conditions de multiplier par deux la réactivité du système polyuréthane.

**Revendications**

1. Oligomères de (1,3-diène) partiellement hydrogénés aminotéléchéliques de formule [ P ] $(ACH_2NH_2)_x$ (4) dans laquelle x est un nombre allant de 1,8 à 2 (inclus) ; P représente un reste d'oligomère de 1,3 diène comprenant au moins 20 % molaire des doubles liaisons de type 1,2 de structure (a)

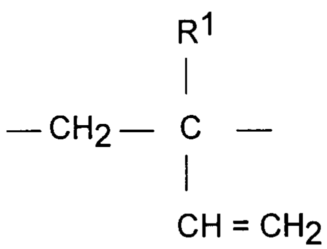

hydrogéné et au plus 10 % molaire des doubles liaisons de type 1,4 (cis et trans) de structure (b)

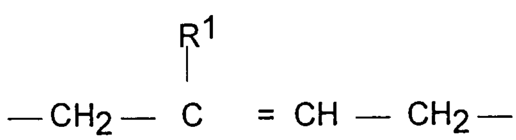

hydrogénées, $R^1$ des structures (a) et (b) représente un atome d'hydrogène, un radical hydrocarboné aliphatique ayant de 1 à 6 atomes de carbone ; A représente un reste divalent choisi parmi les restes :

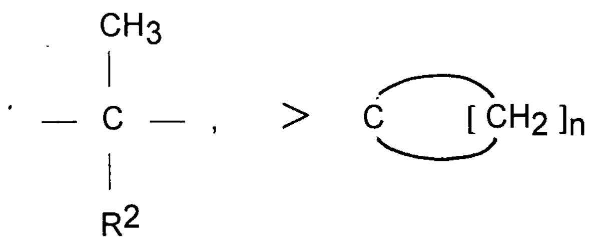

dans lesquels $R^2$ représente un radical hydrocarboné aliphatique, linéaire ou ramifié, ayant un nombre de carbone allant de 1 à 6, un radical cycloaliphatique ayant un nombre de carbone allant de 3 à 7, n est un nombre entier allant de 3 à 9 ; et que ledit oligomère (4) a une masse moléculaire moyenne en nombre $\overline{Mn}$ allant de 500 à 5 000.

**2.** Oligomères selon la revendication 1, caractérisés en ce que le radical $R^1$ est un atome d'hydrogène.

**3.** Oligomères selon l'une des revendications 1 ou 2, caractérisés en ce que le pourcentage molaire des doubles liaisons de type 1,2 hydrogénées est compris entre 25 % et 30 % et le pourcentage molaire des doubles liaisons de type 1,4 (cis et trans) hydrogénées est inférieur à 1 %.

**4.** Oligomères selon l'une des revendications 1 à 4, caractérisés en ce que le radical $R^2$ est un méthyle.

**5.** Oligomères selon l'une des revendications 1 à 4, caractérisés en ce que la masse moléculaire moyenne en nombre $\overline{Mn}$ est comprise entre 1 000 et 3 000.

**6.** Procédé pour la préparation d'oligomères de 1,3-diène partiellement hydrogénés aminotéléchéliques de formule (4) de la revendication 1 qui consiste à hydrogéner en présence de cobalt de Raney un oligomére de 1,3-diène cyanotéléchélique de formule

$$[P_1](ACN)_x \qquad (6)$$

dans laquelle $P_1$ représente un reste d'oligomère de 1,3 diène, A et x ayant les mêmes significations que dans la formule (4), de masse moléculaire moyenne en nombre $\overline{Mn}$ allant de 500. à 5000 et, de préférence comprise entre 1000 et 3000, caractérisé en ce que l'on effectue l'hydrogénation à des températures allant de 100° C à 200° C, sous une pression totale d'hydrogène allant de $5 \times 10^5$ Pa à $30 \times 10^5$ Pa, en présence d'une quantité de cobalt de Raney au plus égale à 5 % en poids par rapport à l'oligomére de 1,3-diène cyanotéléchélique (6) mis en oeuvre et en absence d'ammoniac.

**7.** Procédé selon la revenidcation 6, caractérisé en ce que l'hydrogénation s'effectue à une température comprise entre 140° C et 180° C.

**8.** Procédé selon l'une des revendications 5 ou 6, caractérisé en ce que l'hydrogénation s'effectue à une pression totale d'hydrogène comprise entre $10 \times 10^5$ Pa et $15 \times 10^5$ Pa.

**9.** Procédé selon l'une des revendications 5 à 8, caractérisé en ce que l'hydrogénation s'effectue en présence d'une quantité de cobalt de Raney comprise entre 0,1 % et 2,5 % en poids par rapport à l'oligomère de 1,3-diène cyanotéléchélique mis en oeuvre.

**10.** Utilisation des oligomères de 1,3-diène partiellement hydrogénés aminotéléchéliques de formule (4) de la revendication 1 comme activateur de réactivité de polybutadiènes hydroxylés.

## Claims

**1.** Aminotelechelic partially hydrogenated 1,3-diene oligomers of formula $[P](ACH_2NH_2)_x$ (4) in which x is a number ranging from 1.8 to 2 (inclusive); P denotes a 1,3-diene oligomer residue containing at least 20 mol% of hydrogenated double bonds of 1,2 type, of structure (a)

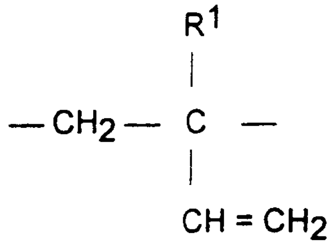

and at most 10 mol% of hydrogenated double bonds of 1,4 (cis and trans) type of structure (b)

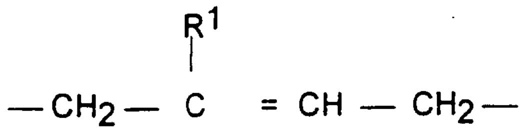

$R^1$ in the structures (a) and (b) denotes a hydrogen atom or an aliphatic hydrocarbon radical containing from 1 to 6 carbon atoms; A denotes a divalent residue chosen from the residues:

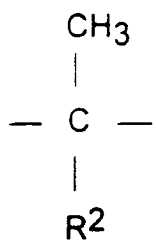 , 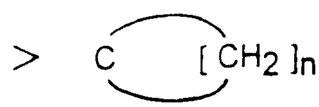

in which $R^2$ denotes a linear or branched aliphatic hydrocarbon radical which has a carbon number ranging from 1 to 6 or a cycloaliphatic radical which has a carbon number ranging from 3 to 7, n is an integer ranging from 3 to 9, and the said oligomer (4) has a number-average molecular mass $\overline{Mn}$ ranging from 500 to 5000.

2. Oligomers according to Claim 1, characterized in that the radical $R^1$ is a hydrogen atom.

3. Oligomers according to either of Claims 1 and 2, characterized in that the molar percentage of hydrogenated double bonds of 1,2 type is between 25 % and 30 % and the molar percentage of hydrogenated double bonds of 1,4 (cis and trans) type is lower than 1 %.

4. Oligomers according to one of Claims 1 to 4, characterized in that the radical $R^2$ is a methyl.

5. Oligomers according to one of Claims 1 to 4, characterized in that the number-average molecular mass $\overline{Mn}$ is between 1000 and 3000.

6. Process for the preparation of aminotelechelic partially hydrogenated 1,3-diene oligomers of formula (4) of Claim 1, which consists in hydrogenating in the presence of Raney cobalt a cyanotelechelic 1,3-diene oligomer of formula

$$[P_1]\ (ACN)_x \qquad (6)$$

in which $P_1$ denotes a 1,3-diene oligomer residue, A and x having the same meanings as in formula (4), of number-average molecular mass $\overline{Mn}$ ranging from 500 to 5000 and preferably between 1000 and 3000, characterized in that the hydrogenation is performed at temperatures ranging from 100°C to 200°C, at a total hydrogen pressure ranging from $5 \times 10^5$ Pa to $30 \times 10^5$ Pa, in the presence of a quantity of Raney cobalt not exceeding 5 % by weight relative to the cyanotelechelic 1,3-diene oligomer (6) used, and in the absence of ammonia.

7. Process according to Claim 6, characterized in that the hydrogenation is performed at a temperature of between 140°C and 180°C.

8. Process according to either of Claims 5 and 6, characterized in that the hydrogenation is performed at a total hydrogen pressure of between $10 \times 10^5$ Pa and $15 \times 10^5$ Pa.

9. Process according to one of Claims 5 to 8, characterized in that the hydrogenation is performed in the presence of a quantity of Raney cobalt of between 0.1% and 2.5 % by weight relative to the cyanotelechelic 1,3-diene oligomer used.

10. Use of the aminotelechelic partially hydrogenated 1,3-diene oligomers of formula (4) of Claim 1 as activator of reactivity of hydroxylated polybutadienes.

**Patentansprüche**

1. Partiell hydrierte aminotelechele Oligomere von 1,3-Dienen der Formel $[P](ACH_2NH_2)_x$ (4), in der x eine Zahl von 1,8 bis 2 (einschließlich) bedeutet; P einen Oligomerrest eines 1,3-Diens mit einem Gehalt an mindestens 20 Mol-% hydrierten Doppelbindungen vom 1,2-Typ der Struktur (a)

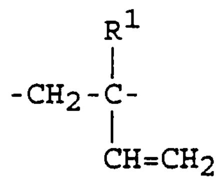

und höchstens 10 Mol-% hydrierten Doppelbindungen vom 1,4-Typ (cis und trans) der Struktur (b)

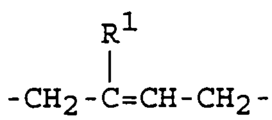

bedeutet, wobei $R^1$ in den Strukturen (a) und (b) ein Wasserstoffatom oder einen aliphatischen Kohlenwasserstoffrest mit 1 bis 6 Kohlenstoffatomen bedeutet; A einen zweiwertigen Rest bedeutet, der unter folgenden Resten ausgewählt ist:

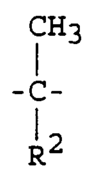
,
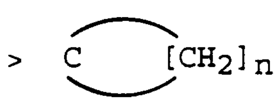

worin die Reste $R^2$ einen aliphatischen, linearen oder verzweigten Kohlenwasserstoffrest mit 1 bis 6 Kohlenstoffatomen oder einen cycloaliphatischen Rest mit 3 bis 7 Kohlenstoffatomen bedeuten und n eine ganze Zahl von 3 bis 9 bedeutet;

wobei das Oligomere (4) ein Zahlenmittel der Molmasse $\overline{Mn}$ von 500 bis 5000 aufweist.

2. Oligomere nach Anspruch 1, dadurch gekennzeichnet, daß es sich beim Rest $R^1$ um ein Wasserstoffatom handelt.

3. Oligomere nach einem der Ansprüche 1 oder 2, dadurch gekennzeichnet, daß der molprozentuale Anteil der hydrierten Doppelbindungen vom 1,2-Typ 25 bis 30% und der molprozentuale Anteil der hydrierten Doppelbindungen vom 1,4-Typ (cis und trans) weniger als 1% beträgt.

4. Oligomere nach einem der Ansprüche 1 bis 4, dadurch gekennzeichnet, daß es sich beim Rest $R^2$ um Methyl handelt.

5. Oligomere nach einem der Ansprüche 1 bis 4, dadurch gekennzeichnet, daß das Zahlenmittel der Molmasse $\overline{Mn}$ 1000 bis 3000 beträgt.

6. Verfahren zur Herstellung der partiell hydrierten aminotelechelen Oligomeren von 1,3-Dienen der Formel (4) nach Anspruch 1, das im Hydrieren eines cyanotelechelen Oligomeren eines 1,3-Diens der Formel

$$[P_1](ACN)_x \qquad (6)$$

in Gegenwart von Raney-Kobalt besteht, worin $P_1$ einen 1,3-Dien-Oligomerrest bedeutet und A und x die gleichen Bedeutungen wie in der Formel (4) haben, wobei das Zahlenmittel der Molmasse $\overline{Mn}$ 500 bis 5000 und vorzugsweise 1000 bis 3000 beträgt, dadurch gekennzeichnet, daß man die Hydrierung bei Temperaturen von 100 bis 200°C unter einem Gesamtwasserstoffdruck von $5 \times 10^5$ Pa bis $30 \times 10^5$ Pa in Gegenwart einer Menge an Raney-Kobalt von höchstens 5 Gew.-%, bezogen auf das eingesetzte cyanotelechele Oligomere des 1,3-Diens (6), und in Abwesenheit von Ammoniak durchführt.

7. Verfahren nach Anspruch 6, dadurch gekennzeichnet, daß man die Hydrierung bei einer Temperatur von 140 bis 180°C durchführt.

8. Verfahren nach einem der Ansprüche 5 oder 6, dadurch gekennzeichnet, daß man die Hydrierung bei einem Gesamtwasserstoffdruck von $10 \times 10^5$ Pa bis $15 \times 10^5$ Pa durchführt.

9. Verfahren nach einem der Ansprüche 5 bis 8, dadurch gekennzeichnet, daß man die Hydrierung in Gegenwart einer Menge an Raney-Kobalt von 0,1 bis 2,5 Gew.-%, bezogen auf das eingesetzte cyanotelechele Oligomere des 1,3-Diens durchführt.

10. Verwendung der partiell hydrierten aminotelechelen Oligomeren von 1,3-Dienen der Formel (4) nach Anspruch 1 als Reaktivitätsaktivator von hydroxylierten Polybutadienen.